(19) Europäisches Patentamt
European Patent Office
Office européen des brevets

(11) EP 1 244 158 A1

(12) EUROPEAN PATENT APPLICATION
published in accordance with Art. 158(3) EPC

(43) Date of publication:
**25.09.2002 Bulletin 2002/39**

(21) Application number: **00969827.5**

(22) Date of filing: **18.10.2000**

(51) Int Cl.⁷: **H01M 4/62**

(86) International application number:
**PCT/JP00/07202**

(87) International publication number:
**WO 01/029917 (26.04.2001 Gazette 2001/17)**

(84) Designated Contracting States:
**AT BE CH CY DE DK ES FI FR GB GR IE IT LI LU MC NL PT SE**

(30) Priority: **18.10.1999 JP 29515699**

(71) Applicant: **Zeon Corporation**
**Tokyo 100-0005 (JP)**

(72) Inventors:
- **MAEDA, Kouichirou, c/o Zeon Corporation**
  **Chiyoda-ku, Tokyo 100-0005 (JP)**
- **NAKAYAMA, Akira, Zeon Corp,**
  **Research & Dev Center**
  **2-1, Yako 1-chome, Kawasaki-ku (JP)**

(74) Representative: **Albrecht, Thomas, Dr. et al**
**Kraus & Weisert,**
**Thomas-Wimmer-Ring 15**
**80539 München (DE)**

# (54) BINDER COMPOSITION FOR ELECTRODES OF LITHIUM ION SECONDARY BATTERIES AND USE THEREOF

(57) A binder composition comprising (1) an organic liquid material, (2) polymer particles (A) insoluble in the organic liquid material, and (3) a polymer (B) soluble in the organic liquid material, said polymer (B) comprising structural units derived from an ethylenically unsaturated carboxylic acid ester represented by the following formula (I):

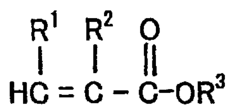

(I)

wherein $R^1$ is hydrogen, methyl or carboxyl group, $R^2$ is hydrogen, methyl or carboxymethyl group, and $R^3$ is substituted or unsubstituted alkyl group. By using this binder composition, an electrode having improved surface smoothness can be produced. A lithium ion secondary battery provided with the electrode has good charge-discharge characteristics.

EP 1 244 158 A1

## Description

Technical Field

This invention relates to a binder composition for an electrode of lithium ion secondary battery, and use thereof. More particularly, it relates a binder composition from which an electrode having an enhanced surface smoothness can be made and a lithium ion secondary battery having excellent characteristics at repetition of charge-discharge cycles can be made; a slurry comprising the binder composition; an electrode made from the slurry; and a lithium ion secondary battery provided with the electrode.

Background Art

In recent years, portable electronic appliances such as a notebook-sized personal computer, a cellular telephone and a personal digital assistant have spread wide. Among secondary batteries used as a power source of the portable electronic appliances, lithium ion secondary batteries (hereinafter referred to as "battery" when appropriate) are widely used. Portable electronic appliances have been rapidly rendered small in size, thin in thickness, light in weight and high in performances, and thus, the use thereof is spreading. The requirements for rendering a battery small in size, thin in thickness, light in weight and high in performances are also becoming severe.

For enhancing the performance of a battery, electrodes, an electrolyte and other battery elements are being studied. As for electrodes, researches are made into a polymer used for a binder as well as an active material and a collector. Usually a binder is mixed together with water or an organic liquid material to prepare a binder composition, and the binder composition is mixed together with an active material and, if desired, an electrically conductive material to prepare a slurry. A collector is coated with the slurry, and the coating of slurry is dried to give an electrode.

An proposal was made as for a binder composition comprising a polymer binder dispersed in an organic liquid medium to give an electrode for a secondary battery exhibiting good retention of capacity at repetition of charge-discharge cycles, for example, in WO98/14519. The coating formed on a collector from the proposed binder composition has poor surface smoothness, and thus the binder composition is not always satisfactory for a secondary battery used for a portable electronic appliance such as a notebook-sized personal computer having a high capacity for which use for a substantially long period is required.

Another proposal was made in Japanese Unexamined Patent Publication No. H10-270046 wherein a cellulosic compound is incorporated in the above-mentioned binder composition comprising a polymer binder dispersed in an organic medium. The solubility in an organic medium of the cellulosic compound varies depending upon the structure and degree of polymerization, and therefore, the binder composition having the cellulosic compound incorporated therein is restricted in use and cannot adapt itself to modification of a battery.

Disclosure of the Invention

To meet the requirements for improved performance of a battery, the present inventors made extensive researches into a binder composition, and found that an electrode having an enhanced surface smoothness can be obtained by incorporating a specific acrylic polymer in a binder composition comprising a polymer binder dispersed in an organic liquid. The present invention has been completed based on this finding.

In one aspect of the present invention, there is provided a binder composition for an electrode of a lithium ion secondary battery, which comprises (1) an organic liquid material, (2) polymer particles (A) insoluble in the organic liquid material, and (3) a polymer (B) soluble in the organic liquid material, said polymer (B) comprising structural units derived from an ethylenically unsaturated carboxylic acid ester represented by the following formula (I):

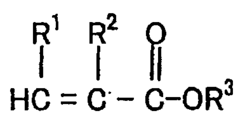

(I)

wherein $R^1$ is hydrogen, a methyl group or a carboxyl group, $R^2$ is hydrogen, a methyl group or a carboxymethyl group, and $R^3$ is an alkyl group which may have a substituent.

In another aspect of the present invention, there is provided a slurry for an electrode of a lithium ion secondary battery, which comprises the above-mentioned binder composition, and an active material.

In still another aspect of the present invention, there is provided an electrode for a lithium ion secondary battery, which is made from the above-mentioned slurry.

In a further aspect of the present invention, there is provided a lithium ion secondary battery, wherein at least one of a positive electrode and a negative electrode of the battery is the above-mentioned electrode.

Best Mode for Carrying Out the Invention

The invention will be described in detail on the binder composition for an electrode of a lithium ion secondary battery, the slurry, the electrode, and the lithium ion secondary battery.

Polymer Particles (A)

The polymer particles (A) are comprised of a polymer insoluble in the organic liquid material. The polymer used varies depending upon the particular organic liquid material. As specific examples of the polymer, there can be mentioned diene polymers such as polybutadiene, polyisoprene, isoprene-isobutylene copolymer, styrene-1,3-butadiene copolymer, styrene-isoprene copolymer, 1,3-butadiene-isoprene-acrylonitrile copolymer, styrene-1,3-butadiene-isoprene copolymer, 1,3-butadiene-acrylonitrile copolymer, styreneacrylonitrile-1,3-butadiene-methyl methacrylate copolymer, styrene-acrylonitrile-1,3-butadiene-itaconic acid copolymer, styrene-acrylonitrile-1,3-butadiene-methyl methacrylate-fumaric acid copolymer, styrene-1,3-butadiene-itaconic acid-methyl methacrylate-acrylonitrile copolymer, acrylonitrile-1,3-butadiene-methacrylic acid-methyl methacrylate copolymer, styrene-1,3-butadiene-itaconic acid-methyl methacrylate-acrylonitrile copolymer and styrene-acrylonitrile-1,3-butadiene-methyl methacrylate-fumaric acid copolymer; styrene polymers such as styrene-n-butyl acrylate-itaconic acid-methyl methacrylate-acrylonitrile copolymer; acrylic acid ester polymers and methacrylic acid ester polymers, such as polymethyl methacrylate, polymethyl acrylate, polyethyl acrylate, polybutyl acrylate, 2-ethylhexyl acrylate-acrylonitrile copolymer and 2-ethylhexyl acrylate-methyl acrylate-acrylic acid-methoxypolyethylene glycol monomethacrylate copolymer; and crosslinked products of these polymers.

Of these, homopolymers and copolymers of conjugated diene monomers, acrylic acid ester monomers and methacrylic acid ester monomers, and copolymers of a predominant amount of conjugated diene monomers, acrylic acid ester monomers or methacrylic acid ester monomers and a minor amount of a monomer or monomers copolymerizable therewith are preferable.

Especially preferable examples of the polymer particles have a composite polymer structure comprised of a polymer particle of these polymers and another polymer which is a homopolymer or copolymer of acrylic acid monomer, acrylic acid ester monomer, methacrylic acid monomer or methacrylic acid ester monomer, or a copolymer of these monomers and a monomer or monomers copolymerizable therewith. The composite polymer particles preferably have an odd-shaped structure which includes, for example, a core-shell type structure, an islands-in-sea type structure, a side-by-side type structure, a tumbler type structure, an octopus ocellus type structure and a raspberry type structure, which are described in "Setchaku (Adhesion)" vol. 34, No. 1, p13-23, especially illustrated in Fig. 6 on page 17.

The shape of polymer particles (A) used in the present invention is not particularly limited, but the polymer particles usually have an average particle diameter in the range of 0.005 to 1,000 $\mu$m (one thousand micrometer), preferably 0.01 to 100 $\mu$m and especially preferably 0.05 to 10 $\mu$m. If the particle diameter is too large, when the polymer particles are used as a binder for electrode, the particles are not sufficiently contacted with an active material and the internal resistance of electrode increases. In contrast, if the particle diameter is too small, an active material is liable to intrude into micro-pores of an active material and a large amount of binder is required.

The polymer particles (A) used in the present invention usually have a gel content of at least 50%, preferably at least 75% and more preferably at least 80%. By the term "gel content" as used herein, we mean the content of a polymer insoluble in an electrolyte (the method of measuring the gel content will be hereinafter described). The gel content signifies the crosslinking degree of polymer particles. If the gel content is smaller than 50%, the polymer particles are occasionally dissolved in an organic liquid material and thus are not preferable. Further, when a collector is coated with the polymer particles, the coating is spread over the surface of active material to reduce the effective surface area of active material leading to reduction in capacity of the active material.

To obtain polymer particles (A) having a high gel content, usually crosslinking must be carried out. The crosslinking may be effected either due to self-crosslinking caused by heat, light, radiation or electron beam, or by introducing a crosslinked structure by a crosslinking agent, or by a combination of self-crosslinking with crosslinking by use of a crosslinking agent

As specific examples of the crosslinking agent, there can be mentioned peroxide crosslinking agents such as benzoyl peroxide, dichlorobenzoyl peroxide, dicumyl peroxide, di-tert-butyl peroxide, 2,5-dimethyl-2,5-di(peroxidebenzoate)hexyne-3,1,4-bis(tert-butylperoxyisopropyl)benzene, lauroyl peroxide, tert-butyl peracetate, 2,5-dimethyl-2,5-di(tert-butylperoxy)hexyne-3, 2,5-dimethyl-2,5-di(tert-butylperoxy)hexane, tert-butyl perbenzoate, tert-butyl perphenylacetate, tert-butyl perisobutyrate, tert-butyl per-sec-octoate, tert-butyl perpivalate, cumyl perpivalate and tert-butyl perdiethylacetate; and azo compounds such as azobisisobtyronitrile and dimethyl azoisobutyrate. The crosslinking agent further includes crosslinking monomers, and, as specific examples of the crosslinking monomer, there can be mentioned dimethacrylate compounds such as ethylene glycol dimethacryalate and diethylene glycol dimethacrylate; trimethacrylate compounds such as trimethylolpropane trimethacrylate; diacrylate compounds such as polyethylene glycol diacrylate and 1,3-butylene glycol diacryalte; triacrylate compounds such as trimethylolpropane triacrylate; and divinyl compounds such as divinylbenzene. Of these crosslinking agents, crosslinking monomers such as dimethacrylate compounds including ethylene glycol dimethacrylate and divinyl compounds including divinylbenzene are preferable.

Polymer (B)

The polymer (B) used in the present invention is a polymer soluble in the organic liquid material, which is prepared by polymerizing an ethylenically unsaturated carboxylic acid ester monomer represented by the formula (I). The polymer (B) is soluble in the organic liquid material contained in the binder composition, and it does not have reactivity with an electrolyte and is not soluble in an electrolyte.

A preferable examples of the polymer (B) is a copolymer comprising 50 to 90% by weight of structure units derived from an ethylenically unsaturated carboxylic acid ester monomer of formula (I) and 50 to 10% by weight of structure units derived from a polar monomer.

In formula (I), $R^1$ is hydrogen, a methyl group or a carboxyl group, and preferably hydrogen. $R^2$ is hydrogen, a methyl group or a carboxymethyl group, and preferably hydrogen or a methyl group. $R^3$ is an alkyl group which may have a substituent or substituents, and preferably an alkyl group which has no substituent and has 1 to 12 carbon atoms, more preferably 1 to 8 carbon atoms. As examples of the substituent which $R^3$ may have, there can be mentioned hydroxyl group, amino groups such as diethylamino group, and a methoxypolyethylene group.

As specific examples of the ethylenically unsaturated carboxylic acid ester monomer of formula (I), there can be mentioned acrylic acid alkyl esters and substituted alkyl esters, such as methyl acrylate, ethyl acrylate, propyl acrylate, isopropyl acrylate, n-butyl acrylate, isobutyl acrylate, n-amyl acrylate, isoamyl acrylate, n-hexyl acrylate, 2-ethylhexyl acrylate, hydroxypropyl acrylate and lauryl acrylate; methacrylic acid alkyl esters and substituted alkyl esters, such as methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, 2-ethylhexyl methacrylate, hydroxypropyl methacrylate and lauryl methacrylate; crotonic acid alkyl esters and substituted alkyl esters, such as methyl crotonate, ethyl crotonate, propyl crotonate, butyl crotonate, isobutyl crotonate, n-amyl crotonate, isoamyl crotonate, n-hexyl crotonate, 2-ethylhexyl crotonate and hydroxypropyl crotonate; amino group-containing methacrylic acid esters such as dimethylaminoethyl methacrylate and diethylaminoethyl methacrylate; alkoxy group-containing methacrylic acid esters such as methoxypolyethylene glycol monomethacrylate; and unsaturated dicarboxylic acid monoesters such as monooctyl maleate, monobutyl maleate and monooctyl itaconate. Of these, alkyl methacrylates and alkyl acrylates, said alkyl group having 1 to 12, preferably 1 to 8 carbon atoms, are preferable. Methyl methacrylate and ethyl methacrylate are especially preferable.

A polar monomer is copolymerized with the ethylenically unsaturated carboxylic acid ester monomer of formula (I) to render the polymer (B) soluble in an organic liquid medium used for a slurry, and to enhance the glass transition temperature Tg of the polymer (B). The polar monomer may be either a monomer having a polar group in the main chain or a monomer having a polar group in a side chain, provided that it can introduce a polar group, other than an ester group, in the polymer (B). The polar monomer includes, for example, ethylenically unsaturated carboxylic acid monomers, acrylamide monomer, methacrylamide monomer, glycidyl group-containing monomers, sulfonic acid group-containing monomers and unsaturated nitrile monomers.

As specific examples of the ethylenically unsaturated carboxylic acid monomer, there can be mentioned unsaturated monocarboxylic acid monomers such as acrylic acid and methacrylic acid; and unsaturated dicarboxylic acid monomers such as maleic acid, fumaric acid, citraconic acid, methaconic acid, glutaconic acid, itaconic acid, crotonic acid, isocrotonic acid and nadic acid. As specific examples of the acrylamide monomers, there can be mentioned acrylamide, N-methylolacrylamide and N-butoxymethylacrylamide. As specific examples of the methacrylamide monomers, there can be mentioned methacrylamide, N-methylolmethacrylamide and N-butoxymethylmethacrylamide. As a specific example of the glycidyl group-containing monomer, there can be mentioned allyl glycidyl ether. As specific examples of the sulfonic acid group-containing monomer, there can be mentioned sodium styrenesulfonate and 2-acrylamide-2-methyl-1-propanesulfonic acid. As specific examples of the unsaturated nitrile monomer, there can be mentioned acrylonitrile, methacrylonitrile and crotononitrile.

The polymer (B) may optionally contain units of a copolymerizable non-polar monomer in addition to the ethylenically unsaturated carboxylic acid monomer units and the polar monomer units. As specific examples of the optional copolymerizable non-polar monomer, olefin monomers such as ethylene and propylene; styrenic monomers such as styrene, $\alpha$ -methylstyrene, $\beta$-methylstyrene and p-t-butylstyrene. Of these, styrene and $\alpha$-methylstyrene are preferable. The amount of non-polar monomer is usually not larger than 20% by weight, preferably not larger than 10%

by weight and more preferably not larger than 5% by weight, based on the weight of the total monomers. When the amount of non-polar monomer exceeds 20% by weight, the solubility of polymer (B) in an organic liquid material is generally reduced.

The polymer (B) has a weight average molecular weight (Mw) in the range of 10,000 to 3,000,000, preferably 50,000 to 2,500,000 and more preferably 100,000 to 2,000,000, as determined by GPC. When the molecular weight of polymer (B) is too low, the stability of slurry is reduced and a uniform coating becomes difficult to obtain. In contrast, when the molecular weight of polymer (B) is too high, the polymer (B) becomes difficult to dissolve in the organic liquid material and thus a desired slurry is difficult to obtain.

The glass transition temperature (Tg) of polymer (B) is not particularly limited, but is preferably in the range of 50 to 300°C, more preferably 70 to 250°C and especially preferably 80 to 200°C. When Tg is too low, the stability of battery capacity on temperature is reduced and the battery performance tends to be deteriorated when the battery is stored or used at a high temperature.

The polymer (B) can be produced by emulsion polymerization, suspension polymerization or dispersion polymerization. Solution polymerization, radiation-initiated polymerization and plasma polymerization can also be employed.

An emulsifier and a dispersant used in emulsion polymerization, suspension polymerization and dispersion polymerization, may be chosen from those which are used in conventional emulsion polymerization, suspension polymerization and dispersion polymerization. As specific examples of the emulsifier and dispersant, there can be mentioned benzenesulfonic acid salts such as sodium dodecylbenzenesulfonate and sodium dodecylphenylethersulfonate; alkylsulfuric acid salts such as sodium laurylsulfate and sodium tetradodecylsulfate; sulfosuccinic acid salts such as sodium dioctylsulfosuccinate and sodium dihexylsulfosuccinate; fatty acid salts such as sodium laurate; ethoxy sulfate salts such as sodium polyoxyethylene lauryl-ether sulfate and sodium polyoxyethylene nonyl-phenyl-ether sulfate; alkanesulfonic acid salts; and nonionic emulsifiers such as alkylether phosphate ester sodium salts; polyoxyethylene nonyl-phenyl-ether, polyoxyethylenesorbitan lauryl ester and polyoxyethylene-polyoxypropylene block copolymer. These emilsifiers and dispersants may be used either alone or as a combination of at least two thereof. The amount of emulsifiers and dispersants may be voluntarily determined, but are usually in the range of 0.01 to 10 parts by weight based on 100 parts by weight of the total monomers. Emulsifiers and dispersants need not be used depending upon the particular polymerization conditions.

Polymerization auxiliaries such as a molecular weight modifier may be used according to the need. As specific examples of the molecular weight modifier, there can be mentioned mercaptans such as t-dodecyl mercaptan, n-dodecyl mercaptan and n-octyl mercaptan; haologenated hydrocarbons such as carbon tetrachloride and carbon tetrabromide; terpinolene; and an $\alpha$ -methylstyrene dimer. The molecular weight modifier can be added before or in the middle of polymerization. The amount of molecular weight modifier is usually in the range of 0.01 to 10 parts by weight, preferably 0.1 to 5 parts by weight, based on 100 parts by weight of the monomers.

The polymerization initiator may be chosen from those which are conventionally used in emulsion polymerization, dispersion polymerization and suspension polymerization. The polymerization initiator used includes, for example, persulfates such as potassium persulfate and ammonium persulfate; hydrogen peroxide; and organic peroxides such as benzoyl peroxide and cumene hydroperoxide. These polymerization initiators may be used either alone, or as a redox catalyst, namely, as a combination thereof with a reducing agent such as sodium acid sulfite, sodium thiosulfate or ascorbic acid. Further, azo compounds such as 2,2'-azobisisobutyronitrile, 2,2'-azobis(2,4-dimethylvaleronitrile), 2,2'-azobis(4-methoxy-2,4-dimethylvaleronitrile, dimethyl-2,2'-azobisisobutyrate and 4,4'-azobis(4-cyanopentanoic acid); and amidine compounds such as 2,2'-azobis(2-aminodipropane)-dihydrochloride, 2,2'-azobis(N,N-dimethyleneisobutylamidine) and 2,2'-azobis(N,N'-dimethyleneisobutylamidine)-dihydrochloride, may also be used. The polymerization initiator may be used either alone or as a combination of at least two thereof. The amount of polymerization initiator is usually in the range of 0.01 to 10 parts by weight, preferably 0.1 to 5 parts by weight, based on 100 parts by weight of the monomers.

The polymerization temperature and polymerization time can be appropriately chosen depending upon the particular polymerization method and the kind of polymerization initiator, but usually, the polymerization temperature is in the range of about 50 to 200°C and the polymerization time is in the range of 0.5 to 200 hours. Further, conventional additives such as a polymerization aid auxiliary, for example, an amine can be additionally used.

When an acidic monomer such as acrylic acid or maleic acid and an aqueous medium are used for the preparation of polymer (B), pH of the polymerization medium is preferably adjusted to a value of 5 to 9, preferably 5.8 to 8.2 by incorporating an alkali metal hydroxide such as lithium hydroxide, sodium hydroxide or potassium hydroxide, aqueous ammonia or an amine. Of these, lithium hydroxide is preferable because it does not influence the battery properties. If the pH value is too low, a copper foil used as a collector is liable to be deteriorated. In contrast, too high pH value tends to invite deterioration of an aluminum foil.

Organic Liquid Material

The organic liquid material used in the present invention is a dispersion medium wherein the polymer particles (A) are not dissolved but dispersed, and the polymer (B) is dissolved. The organic liquid material can be used, together with the binder composition of the present invention and an active material, as a dispersion medium for the preparation of a slurry for an electrode of a lithium ion secondary battery. The organic liquid material preferably has a boiling point of not lower than 80°C, more preferably not lower than 100°C, at atmospheric pressure. If the organic liquid material has a too low boiling point, the slurry of the present invention is sometimes difficult to coat on a collector for the preparation of an electrode. Further, when a collector is coated with the slurry and then the coating of slurry is dried, the polymer particles tend to migrate to the electrode surface in the drying step with the results of reduction of mechanical strength of battery and lowering of binding force. The organic liquid material must be removed under conditions such that the collector is not deteriorated in the drying step, and therefore, the organic liquid material preferably has a boiling point of not higher than 300°C.

As specific examples of the organic liquid material, there can be mentioned polar organic liquid materials which include ketones such as methyl ethyl ketone, methyl isobutyl ketone, cyclopentanone, cyclohexanone and cycloheptanone; linear or cyclic amides such as dimethylformamide and N-methyl-2-pyrrolidone; alcohols such as butyl alcohol, amyl alcohol and hexyl alcohol; and esters such as methyl lactate, ethyl lactate, butyl lactate, butyl acetate and methyl benzoate. Of these, linear or cyclic amides, ketones and esters, which have a boiling point of 100 to 250°C, are preferable in view of ease in handling, safety and synthetic process.

Binder Composition

As one method for dispersing the polymer particles (A) in an organic liquid material, an aqueous dispersion of the polymer particles (A) can be subjected to substitution of dispersion medium whereby the polymer particles become dispersed in the organic liquid material. As a procedure of substitution of dispersion medium, evaporation of water using an evaporator can be employed in the case when the organic liquid material used has a boiling point higher than that of water. In the case when the organic liquid material is capable of forming an azeotropic mixture with water, azeotropic distillation can be conducted using evaporator, and, when the water content is reduced to a certain level, the residual water can be removed by using an absorbant such as molecular sieve or using a reverse osmosis membrane. Before, during or after the step of removing water by an evaporator, an organic liquid material can be added.

As another method of dispersing the polymer particles (A) in an organic liquid material, there can be mentioned a method wherein a polymer as produced in an aqueous medium is coagulated, dried and then pulverized into a powdery polymer, and the powdery polymer is dispersed in an organic liquidmaterial, and a method wherein the coagulated and dried polymer is mixed together with an organic liquid material and then the mixture is pulverized. The dispersion of polymer particles (A) in an organic liquid material can be prepared by using a conventional dispersion mixer such as ball mill and sand mill, an ultrasonic dispersion mixer, or a homogenizer. By a procedure of pulverizing a polymer and then dispersing a powdery polymer in an organic liquid material, the desired dispersion of polymer particles can be obtained even if the organic liquid material has a boiling point lower than that of water and is incapable of forming an azeotropic mixture with water.

The method of dissolving the polymer (B) in an organic liquid medium is not particularly limited. For example, a method can be adopted wherein a dried polymer is prepared and then dissolved in an organic liquid material having or not having polymer particles (A) dissolved therein.

The content of polymer particles (A) and polymer (B) in the binder composition of the present invention for an electrode of a lithium ion secondary battery is such that the sum of polymer particles (A) and polymer (B) is in the range of 0.1 to 70% by weight, preferably 0.5 to 60% by weight and more preferably 1 to 50% by weight based on the weight of the binder composition. When the sum of polymer particles (A) and polymer (B) is outside this range, the electrode surface tends to have poor smoothness and a coating property of slurry is liable to be reduced.

The ratio of polymer particles (A) to polymer (B) is in the range of 99/1 to 20/80 by weight, preferably 75/25 to 25/75 by weight. When the (A)/(B) ratio is outside this range, the electrode tends to have poor flexibility and a coating property of slurry is liable to be reduced.

Slurry for Electrode of Battery

The slurry of the present invention for an electrode of a lithium ion secondary battery is prepared by mixing together an active material, the above-mentioned polymer particles (A), the above-mentioned polymer (B) and the organic liquid material.

The slurry of the present invention can be prepared by incorporating the above mentioned binder composition with an active material. But, a procedure wherein two ingredients of (i) a composition comprising polymer particles (A)

and an organic liquid material, and (ii) a composition comprising polymer (B) and the organic liquid material, are incorporated in voluntary order with an active material; or a procedure wherein three ingredients (i) a composition comprising polymer particles (A) and an organic liquid material, and (ii) polymer (B), and (iii) the organic liquid material, are incorporated in voluntary order with an active material, can be adopted.

The active material used is not particularly limited provided that it is used for ordinary lithium ion secondary batteries. As specific examples of the active material for a negative electrode, there can be mentioned carbonaceous materials such as fluorinated carbon, graphite, natural graphite, MCMB (meso-carbon micro beads), PAN carbon fiber and pitch carbon fiber, electrically conductive polymers such as polyacene; lithium nitride compounds such as $Li_3N$; lithium metal or its alloy; metal compounds such as $TiS_2$ and $LiTiS_2$; metal oxides such as $Nb_2O$, FeO, $Fe_2O$, $Fe_3O_4$, CoO, $Co_2O_3$ and $Co_3O_4$; and composite metal oxides such as $AxMyNzO_2$ wherein A is at least one element selected from Li, P and B, M is at least one element selected from Co, Ni and Mn, N is at least one element selected from Al and Sn, O is oxygen, and x, y and z are numbers satisfying the formulae:

$$1.10 \geqq x \geqq 0.05,\ 4.00 \geqq y \geqq 0.85,\ \text{and}\ 2.00 \geqq z \geqq 0$$

and other metal oxides.

The amount of an active material in the slurry for an electrode of a secondary battery is not particularly limited, but is usually in the range of 1 to 1,000 times, preferably 5 to 1,000 times and more preferably 10 to 1,000 times of the total weight of polymer particles (A) and polymer (B). When the amount of an active material is too small, an active material layer formed on a collector has an increased amount of inactive portions and the electrode is liable to have poor performances. In contrast, when the amount of an active material is too large, the adhesion of the active material to a collector becomes poor and the active material tends to be fallen from the collector. The organic liquid material can be added to the slurry so that the concentration of an active material in the slurry be suitable for coating a collector with the slurry.

## Electrode

The electrode of the present invention for a lithium ion secondary battery comprises is made from the above-mentioned slurry of the present invention. That is, a collector is coated with the above-mentioned slurry and then the organic liquid material is removed from a coating of the slurry whereby an electrode comprising a collector, the outer surface of which is coated with a matrix having fixed therein an active material, is obtained.

The collector used is not particularly limited provided that it is composed of an electrically conductive material. The collector is usually composed of metal such as iron, copper, aluminum or nickel. The shape of the collector is also not particularly limited, and the collector is usually used in a sheet form having a thickness of about 0.001 mm to 0.5 mm.

The procedure for coating a collector with the slurry is also not particularly limited. For example, a collector can be coated by a coating using a coater such as a roll coater or a knife coater, a doctor-blade coating, dip coating, and brush coating. The amount of the slurry applied is not particularly limited, and is usually such that the thickness of the active material layer formed after removal of the organic liquid material on the collector has a thickness of about 0.005 mm to 5 mm, preferably about 0.005 mm to 2 mm. The procedure for drying an as-formed coating is not particularly limited, and includes, for example, an air-flow drying or a vacuum drying is employed. The drying conditions should be chosen so that the liquid medium used is removed as soon as possible provided that occurrence of stress cracks in the active material layer due to stress concentration, and separation of the active material layer from the collector can be avoided.

The electrode can be pressed to enhance the electric conductivity, to enhance the binding force between the active material the collector, and further to enhance the density of the active material layer for enabling the introduction of a predetermined amount of active material into a battery. The pressing can be carried out by using a conventional press such as a heated roll press, a cold roll press or a flat plate press.

## Secondary Battery

The lithium ion secondary battery of the present invention comprises the above-mentioned electrode as at least one of a positive electrode and negative electrode.

The lithium ion secondary battery is fabricated by a conventional procedure using the above-mentioned electrode, an electrolyte (explained below) and a separator and other elements according to the need. For example, a positive electrode and a negative electrode are superposed with a separator interposed between the two electrodes, and the thus-formed assembly is wound or folded and then inserted into a vessel. An electrolyte solution is introduced into the vessel, and the vessel is sealed with a sealing plate or a safety valve. According to the need, an expanded

metal, overcurrent protecting elements such as PTC element and fuse, and lead plate are assembled into the vessel so that pressure increase inside the battery and the over charge and discharge are avoided. The shape of the secondary battery is not particularly limited, and may be any of, for example, coin-shape, button shape, sheet shape, cylindrical shape, rectangular shape and flat shape.

An electrolyte used in the lithium ion secondary battery is not particularly limited and a suitable electrolyte can be chosen depending upon the particular active materials for positive and negative electrodes used so as to obtain the desired battery performances. The electrolyte used includes those which are used for lithium secondary batteries, and, as specific examples thereof, there can be mentioned $LiClO_4$, $LiBF_6$, $CF_3SO_3Li$, LiI, $LiAlCl_4$ and $LiPF_6$. As examples of a liquid medium for dissolving the electrolyte, there can be mentioned ethers, ketones, lactones, nitriles, amines, amides, sulfur compounds, chlorinated hydrocarbons, esters, carbonates, nitro compounds, phosphate ester compounds and sulfolane compounds. Of these, carbonates such as ethylene carbonate and diethyl carbonate are generally preferable.

The invention will now be described more specifically by the following working examples that by no means limit the scope of the invention.

In the working examples, parts and % are by weight unless otherwise specified.

Gel content and particle diameter of polymer particles (A), Tg of polymer (B) and surface roughness of an electrode were determined by the following methods.

(1) Gel Content of Polymer Particles (A)

A polymer film having a thickness of about 0.2 mm (polymer weight: about 0.2 g) is air-dried at 120°C for 24 hours and further vacuum-dried at 120°C for 24 hours. The dry film is weighed (weight: $D_1$). The dry film is dipped in an electrolyte comprising ethylene carbonate and diethyl carbonate (mixing ratio: 50/50 by volume; amount: 100 times by weight of the dry film) at 70°C for 72 hours, and then, filtered through a wire mesh sieve with a 200 mesh size. The insoluble matter remaining on the sieve is vacuum-dried at 120°C for 24 hours and then weighed (weight: $D_2$). The gel content is calculated according to the equation:

$$\text{Gel content (\%)} = (D_2/D_1) \times 100$$

(2) Average Particle Diameter of Polymer (B)

After removal of an organic liquid material, the major axis of polymer particle is measured by a transmission electron microscope. Measurement is conducted on 20 polymer particles and an average value is calculated.

(3) Glass Transition Temperature (Tg: °C)

Tg is determined from DSC curve according to JIS K2121.

(4) Surface Roughness of Electrode

An electrode is cut into a square of 1.5 cm × 1.5 cm before the electrode is roll-pressed. The square electrode is fixed on a slide glass. Surface configuration is recorded by using an optical tracer (Phocodin; available from Dr. Ing. Perthen GmbH). Deflection due to fixing of the electrode is calibrated, and maximum roughness, i.e., the maximum value of difference in surface heights, and standard deviation are evaluated.

<u>Example 1</u>

(Production of Polymer Particles A1)

An autoclave equipped with a stirrer was charged with 2,000 parts of water, 500 parts of styrene, 500 parts of butadiene, 350 parts of methyl methacrylate, 150 parts of methyl acrylate, 150 parts of 2-ethylhexyl acrylate, 50 parts of itaconic acid, 30 parts of divinylbenzene, 4 parts of ammonium laurylsulfate and 10 parts of sodium carbonate to prepare a monomer emulsion.

An autoclave equipped with a stirrer was charged with 3,400 parts of water, 10 parts of ethylenediaminetetraacetic acid, 10 parts of ammonium laurylsulfate, 20 parts of potassium persulfate, and 10% by volume of the above-mentioned monomer emulsion. The content was heated to 80°C, and allowed to react for 1 hour while being stirred. Then 80 parts of potassium persulfate and 200 parts of water were added, and the mixture was maintained at 80°C, and the entire amount of residual monomer emulsion was added with stirring. Further, reaction was carried out for 4 hours while the mixture was maintained at 80°C with stirring to give an opaque white latex A1 (yield: 99%). Polymer particles A1 dispersed in this latex A1 had an average particle diameter of 0.16 µm. The polymer particles A1 had a gel content of 97%.

Unreacted residual monomers in the latex A1 were removed by steam distillation, and then lithium hydroxide was added to adjust the pH value to 7.2. Then N-methyl-2-pyrrolidone (NMP) in amount of 5 times of the entire weight

was added. Water was removed by an evaporator to obtain a dispersion in an organic liquid material of polymer particles A1 having a solid content of 7.6% by weight.

(Production of Polymer B1)

An autoclave equipped with a stirrer was charged with 500 parts of ion-exchanged water, 140 parts of methyl methacrylate, 60 parts of methacrylic acid, 5 parts of ammonium laurylsulfate, 3 parts of sodium carbonate and 2 parts of potassium persulfate. The content was heated to 53°C and allowed to react for 25 hours while being stirred.

Unreacted residual monomers were removed under a reduced pressure from the obtained latex (B1), and then lithium hydroxide was added to adjust the pH value to 6.2 to give a opaque white latex B1 (yield: 98%).

Latex B1 was dried to obtain polymer B1. Polymer B1 had Tg of 173°C.

Polymer B1 was dissolved in NMP to prepare a polymer solution B1.

(Production of Binder Composition [1])

The above-mentioned dispersion of polymer particles A1 in an organic liquid material and the above-mentioned polymer solution B1 were mixed together at a solid content ratio of 3/1 by weight. The concentration of the mixture was adjusted to give a binder composition [1] having a solid content of 5% by weight.

(Production of Negative Electrode and Evaluation of Surface Roughness)

4 parts (as solid content) of binder composition [1] was incorporated with 96 parts of natural graphite (NC-C, available from Kansai Coke and Chemicals Co.) as an active material for negative electrode. Further, N-methyl-2-pyrrolidone (NMP) was added and thoroughly stirred to prepare a slurry having a solid content of 35% by weight for negative electrode. A copper foil having a thickness of 18 μm and a width of 8 cm was coated with the slurry for negative electrode by using a roll coater (150WI type coater, available from Toyo System Co.), and then NMP was removed. The surface roughness of the thus-obtained electrode was evaluated. The maximum roughness was 18 μm and the standard deviation was 2 μm. The electrode was roll-pressed to obtain a negative electrode having a thickness of 95 μm.

(Production of Positive Electrode)

6 parts (as solid content) of binder composition [1] was incorporated with 91 parts of $LiCO_2$ as a positive active material. Further, 3 parts of acetylene black and 100 parts of NMP were added and thoroughly stirred to prepare a slurry for positive electrode. An aluminum foil having a thickness of 18 μm and a width of 8 cm was coated with the slurry for positive electrode by the same procedure as for the negative electrode. NMP was removed, and then the coated aluminum foil was roll-pressed to obtain a positive electrode having a thickness of 75 μm.

(Production of Battery and Evaluation)

Each of the positive electrode and the negative electrode was cut into a square of 4 cm × 4 cm, and sandwiched between separators made of polypropylene and having a thickness of 25 μm. This electrode/separator assembly was placed in a vessel, and an electrolyte was introduced therein so that air did not remain therein, to obtain a battery. The electrolyte was prepared by dissolving LiPF6 as electrolyte at a concentration of 1 mol/liter in mixed liquid of ethylene carbonate and diethyl carbonate (1:2 by volume).

The thus-made battery was charged to 4.2 V and then discharged to 3.2 V according to a constant current system at a current density of 0.1 $mA/cm^2$. The charge and discharge were repeated to measure the capacity of battery. The capacity (capacity per unit weight of negative electrode active material) was 347 mAh/g at the fifth charge, 332 mAh/g at the 10th discharge and 314 mAh/g at the 100th charge.

<u>Example 2</u>

(Production of Polymer Particles A2)

An autoclave equipped with a stirrer was charged with 2,000 parts of water, 500 parts of methyl methacrylate, 400 parts of 2-ethylhexyl acrylate, 200 parts of styrene, 50 parts of divinylbenzene, 12 parts of ammonium laurylsulfate and 10 parts of sodium carbonate to prepare a monomer emulsion.

An autoclave equipped with a stirrer was charged with 2,400 parts of water, 10 parts of ethylenediaminetetraacetic acid, 11 parts of ammonium laurylsulfate, 20 parts of potassium persulfate, and 10% by volume of the above-mentioned monomer emulsion. The content was heated to 80°C, and allowed to react for 1 hour while being stirred. Then 2 parts of potassium persulfate and 20 parts of water were added, and the mixture was maintained at 80°C, and the entire amount of residual monomer emulsion was added with stirring. Further, reaction was carried out for 8 hours while the mixture was maintained at 80°C with stirring to give an opaque white latex A2 (yield: 99%). Polymer particles A2 dispersed in this latex A2 had an average particle diameter of 0.13 μm. The polymer particles A2 had a gel content of 97%.

Unreacted residual monomers in the latex A2 were removed by steam distillation, and then lithium hydroxide was added to adjust the pH value to 6.5. Then N-methyl-2-pyrrolidone (NMP) in amount of 5 times of the entire weight was added. Water was removed by an evaporator to obtain a dispersion in an organic liquid material of polymer particles A2 having a solid content of 8.8% by weight.

(Production of Polymer B2)

An autoclave equipped with a stirrer was charged with 500 parts of ion-exchanged water, 80 parts of methyl acrylate, 120 parts of methacrylic acid, 5 parts of ammonium laurylsulfate, 3 parts of sodium carbonate and 2 parts of potassium persulfate. The content was heated to 53°C and allowed to react for 25 hours while being stirred.

Unreacted residual monomers were removed under a reduced pressure from the obtained latex (B2), and then lithium hydroxide was added to adjust the pH value to 6.5 to give a opaque white latex B2 (yield: 98%).

Latex B2 was dried to obtain polymer B2. Polymer B2 had Tg of 180°C.

Polymer B2 was dissolved in NMP to prepare a polymer solution B2.

(Production of Binder Composition [2])

The above-mentioned dispersion of polymer particles A2 in an organic liquid material and the above-mentioned polymer solution B2 were mixed together at a solid content ratio of 3/1 by weight. The concentration of the mixture was adjusted to give a binder composition [2] having a solid content of 5% by weight.

(Production of Negative Electrode)

2 parts (as solid content) of binder composition [2] was incorporated with 96 parts of carbon (MCMB, available from Osaka Gas Chemicals Co.) as an active material for negative electrode. Further, NMP was added and thoroughly stirred to prepare a slurry having a solid content of 45% by weight for negative electrode. A copper foil having a thickness of 18 μm was coated with the slurry for negative electrode, and then dried. The surface roughness of the thus-obtained electrode was evaluated. The maximum roughness was 16 μm and the standard deviation was 4 μm. The electrode was roll-pressed to obtain a negative electrode having a thickness of 82 μm.

(Production of Positive Electrode)

3 parts (as solid content) of binder composition [2] was incorporated with 94 parts of $LiCO_2$ as an active material for positive electrode. Further, 3 parts of acetylene black was added and thoroughly stirred to prepare a slurry for positive electrode. An aluminum foil having a thickness of 18 μm was coated with the slurry for positive electrode, dried and then roll-pressed to obtain a positive electrode having a thickness of 65 μm.

(Production of Battery and Evaluation)

A battery was made and tested by the same procedures as in Example 1. The capacity of battery was 315 mAh/g at the fifth discharge, 311 mAh/g at the 10th discharge and 305 mAh/g at the 50th discharge.

<u>Comparative Example 1</u>

A battery was made by the same procedures as employed in Example 1 wherein carboxymethylethylcellulose was used instead of polymer B1 prepared in Example 1. The surface roughness of negative electrode was such that the maximum roughness was 48 μm and the standard deviation was 11 μm.

The battery was charged to 4.2 V and then discharged to 3.2 V according to a constant current system at a current density of 0.1 $mA/cm^2$. The charge and discharge were repeated to measure the capacity of battery. The capacity was 337 mAh/g at the fifth discharge, 301 mAh/g at the 10th discharge and 242 mAh/g at the 100th discharge.

As seen from the above results, the binder composition of the present invention gives an electrode having a smooth surface, and further gives a secondary battery exhibiting good charge-discharge characteristics.

INDUSTRIAL APPLICABILITY

By using the binder composition of the present invention comprising polymer particles (A) insoluble in an organic liquid material and polymer (B) soluble in the organic liquid material, an electrode having an improved surface smoothness can be obtained. A lithium ion secondary battery provided with the electrode has good charge-discharge characteristics.

## Claims

1. A binder composition for an electrode of a lithium ion secondary battery, which comprises (1) an organic liquid material, (2) polymer particles (A) insoluble in the organic liquid material, and (3) a polymer (B) soluble in the organic liquid material, said polymer (B) comprising structural units derived from an ethylenically unsaturated carboxylic acid ester represented by the following formula (I):

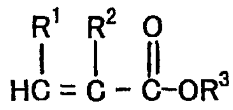

(I)

wherein $R^1$ is hydrogen, a methyl group or a carboxyl group, $R^2$ is hydrogen, a methyl group or a carboxymethyl group, and $R^3$ is an alkyl group which may have a substituent or substituents.

2. The binder composition according to claim 1, wherein the polymer particles (A) have an average particle diameter in the range of 0.005 to 1,000 μm (one thousand micrometer).

3. The binder composition according to claim 1 or 2, wherein the polymer particles (A) have a gel content of at least 50%.

4. The binder composition according to any one of claims 1 to 3, wherein the polymer (B) is a copolymer comprising 50 to 90% by weight of structural units derived from the ethylenically unsaturated carboxylic acid ester of formula (I) and 50 to 10% by weight of structural units derived from a polar monomer.

5. The binder composition according to any one of claims 1 to 4, wherein, in formula (I), $R^1$ is hydrogen, $R^2$ is hydrogen or a methyl group, and $R^3$ is an alkyl group having 1 to 12 carbon atoms.

6. The binder composition according to any one of claims 1 to 5, wherein the polymer (B) has a weight average molecular weight (Mw) in the range of 10,000 to 3,000,000.

7. The binder composition according to any one of claims 1 to 6, wherein the polymer (B) has a glass transition temperature (Tg) in the range of 50°C to 300°C.

8. The binder composition according to any one of claims 1 to 7, wherein the liquid material has a boiling point in the range of 80°C to 300°C at atmospheric pressure.

9. The binder composition according to any one of claims 1 to 8, wherein the total content of the sum of polymer particles (A) and polymer (B) is in the range of 0.1 to 70% by weight based on the weight of the binder composition, and the ratio of polymer particles (A)/polymer (B) is in the range of 99/1 to 20/80 by weight.

10. A slurry for an electrode of a lithium ion secondary battery, which comprises the binder composition as claimed in any one of claims 1 to 9, and an active material.

11. The slurry according to claim 10, wherein the amount of the active material is in the range of 1 to 1,000 times by weight of the total weight of polymer particles (A) and polymer (B).

12. An electrode of a lithium ion secondary battery, which is made from the slurry as claimed in claim 10 or 11.

**13.** A lithium ion secondary battery, wherein at least one of a positive electrode and a negative electrode of the battery is the electrode as claimed in claim 12.

## INTERNATIONAL SEARCH REPORT

International application No.
PCT/JP00/07202

A. CLASSIFICATION OF SUBJECT MATTER
Int.Cl[7] H01M 4/62

According to International Patent Classification (IPC) or to both national classification and IPC

B. FIELDS SEARCHED

Minimum documentation searched (classification system followed by classification symbols)
Int.Cl[7] H01M 4/62

Documentation searched other than minimum documentation to the extent that such documents are included in the fields searched
Jitsuyo Shinan Koho 1926-1996 Toroku Jitsuyo Shinan Koho 1994-2000
Kokai Jitsuyo Shinan Koho 1971-2000 Jitsuyo Shinan Toroku Koho 1994-2000

Electronic data base consulted during the international search (name of data base and, where practicable, search terms used)
WPI/L
JICST FILE(JOIS)

C. DOCUMENTS CONSIDERED TO BE RELEVANT

| Category* | Citation of document, with indication, where appropriate, of the relevant passages | Relevant to claim No. |
|---|---|---|
| A | JP, 10-214629, A (Hitachi Maxell, Ltd.), 11 August, 1998 (11.08.98), Par. Nos. [0009] to [0014] (Family: none) | 1-13 |
| A | JP, 11-167921, A (Nippon Zeon Co., Ltd.), 22 June, 1999 (22.06.99), Par. Nos. [0010] to [0021] (Family: none) | 1-13 |
| A | US, 5595841, A (Fuji Photo Film Co., Ltd.), 21 January, 1997 (21.01.97), Column 1, line 49 to Column 2, line 9, & JP, 8-287915, A (Fuji Photo Film Co., Ltd.), 01 November, 1996 (01.11.96), Par. Nos. [0004] to [0006] (Family: none) | 1-13 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 January, 2001 (10.01.01) | 23 January, 2001 (23.01.01) |
| Name and mailing address of the ISA/ Japanese Patent Office | Authorized officer |
| Facsimile No. | Telephone No. |

Form PCT/ISA/210 (second sheet) (July 1992)